# EUROPEAN PATENT SPECIFICATION

(11) **EP 3 159 094 B1**
(45) Date of publication and mention of the grant of the patent: **08.05.2019**
(21) Application number: 15886334.0
(22) Date of filing: 24.03.2015
(51) Int. Cl.: B23K 26/144, B22F 3/105, B23K 26/21, B23K 26/34, B29C 64/141, B29C 64/209, B33Y 30/00

(54) **PROCESSING NOZZLE, PROCESSING HEAD, PROCESSING DEVICE**
BEARBEITUNGSDÜSE, BEARBEITUNGSKOPF, BEARBEITUNGSVORRICHTUNG
BUSE DE TRAITEMENT, TÊTE DE TRAITEMENT, DISPOSITIF DE TRAITEMENT

(43) Date of publication of application: 26.04.2017
(73) Proprietor: Technology Research Association for Future Additive Manufacturing, Tokyo 103-0027 (JP)
(72) Inventor: FUJIYA, Yasuyuki, Takasago-shi Hyogo 676-8686 (JP); KOMATSU, Yoshinao, Takasago-shi Hyogo 676-8686 (JP); NARITA, Ryuichi, Takasago-shi Hyogo 676-8686 (JP)
(74) Representative: TBK
(86) International application number: PCT/JP2015/059003
(87) International publication number: WO 2016/151781

(56) References cited:
- EP-A1- 2 343 148
- EP-A1- 2 502 729
- JP-A- 2007 222 869
- JP-A- 2009 505 812
- JP-A- 2012 125 772
- US-A- 5 837 960

## Description

### TECHNICAL FIELD

The present invention relates to a processing nozzle, a processing head, and a machining apparatus.

### BACKGROUND ART

In the above technical field, patent literature 1 discloses a technique of supplying a plurality of types of powders while changing a distribution ratio. For example, Table 1 discloses a technique of gradually changing the mixing ratio of powders from the first layer to the fifth layer. In paragraph 0058, there is disclosed moving an inner nozzle 31 in the vertical direction, thereby changing the concentration position of a powder flow 4 discharged from the gap between the tips of the inner nozzle 31 and an outer nozzle 32. Patent literature 2 discloses a processing nozzle for use to eject a powder material to a molten pool formed on a process surface by a laser beam, comprising:an inner housing that forms an optical path to pass the laser beam; and an outer housing arranged while being separated from said inner housing by a gap serving as a first supply path of the powder material.

### CITATION LIST

### PATENT LITERATURE

Patent literature 1: Japanese Patent Laid-Open No. 2012-125772. Patent literature 2: US-A-5837960.

### SUMMARY OF THE INVENTION

### TECHNICAL PROBLEM

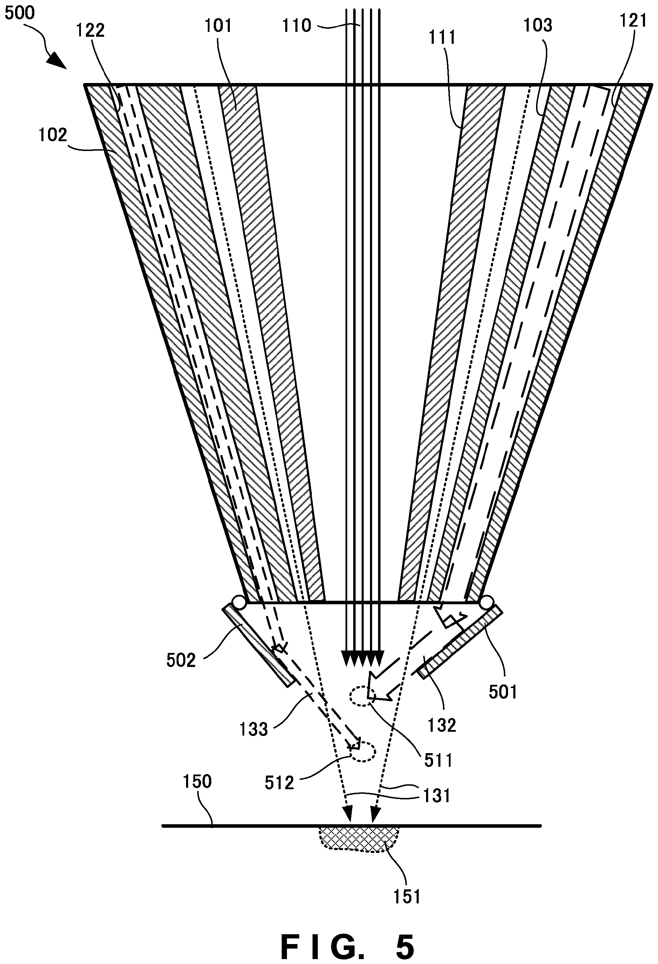

According to the technique described in the above literature, however, a powder is ejected from only one supply path 41 in both an arrangement shown in Fig. 5 and that shown in Fig. 7. That is, only one type of powder can be supplied at once. For this reason, to supply a plurality of types of powders to the process surface, they need to be mixed in advance and then supplied. In this case, segregation occurs during supply, and a composition cannot be implemented as desired.

The present invention enables to provide a technique of solving the above-described problem.

### SOLUTION TO PROBLEM

One aspect of the present invention provides a processing nozzle used to eject a powder material to a molten pool formed on a process surface by a laser beam, comprising:
an inner housing that forms an optical path to pass the laser beam; and
an outer housing arranged while being separated from the inner housing by a gap serving as a first supply path of the powder material,
wherein a second supply path of the powder material and a third supply path having a diameter different from the second supply path are provided inside the outer housing.

Another aspect of the present invention provides a processing head comprising:
the above-described processing nozzle; and a converging device that converges a laser beam.

Still other aspect of the present invention provides a machining apparatus comprising:
the above-described processing head; and
a material supplier that supplies a powder material to the processing head.

### ADVANTAGEOUS EFFECTS OF INVENTION

According to the present invention, it is possible to provide a processing nozzle capable of simultaneously ejecting a plurality of types of powders.

### BRIEF DESCRIPTION OF THE DRAWINGS

Fig. 1 is a perspective view showing the arrangement of a processing nozzle according to the first embodiment of the present invention;
Fig. 2 is an end view showing the arrangement of the bottom surface of the processing nozzle according to the first embodiment of the present invention;
Fig. 3 is a longitudinal sectional view showing the arrangement of the processing nozzle according to the first embodiment of the present invention;
Fig. 4 is a schematic view showing the arrangement of a machining apparatus according to the first embodiment of the present invention;
Fig. 5 is a longitudinal sectional view showing the arrangement of a processing nozzle according to the second embodiment of the present invention; and
Fig. 6 is a perspective view showing the arrangement of a processing nozzle according to the third embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

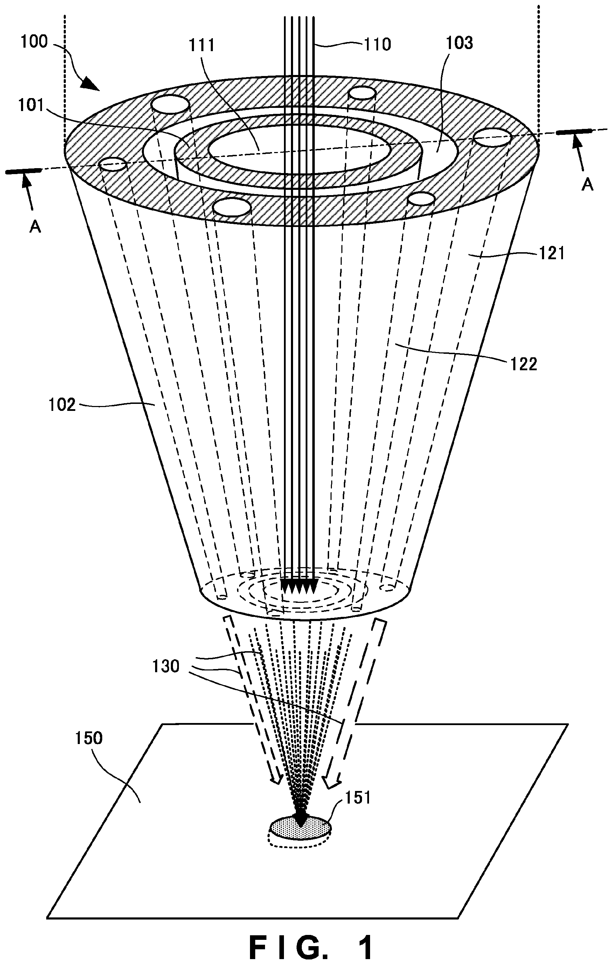

A processing nozzle 100 according to the first embodiment of the present invention will be described with reference to Figs. 1 to 4. The processing nozzle 100 is a nozzle configured to eject a powder material 130 to a molten pool 151 formed on a process surface 150 by a laser beam 110.

The processing nozzle 100 includes an inner housing 101 that forms an optical path 111 to pass the laser beam 110, and an outer housing 102 arranged while being separated from the inner housing 101 by a gap serving as a supply path 103 of the powder material 130.

Powder supply paths 121 and 122 are further provided inside the outer housing 102. The powder supply paths 121 and 122 have different diameters. The supply paths 121 and 122 include three supply paths each. The outer housing 102 has a cylindrical shape, and the supply paths 121 and 122 are circumferentially alternately provided inside the outer housing 102.

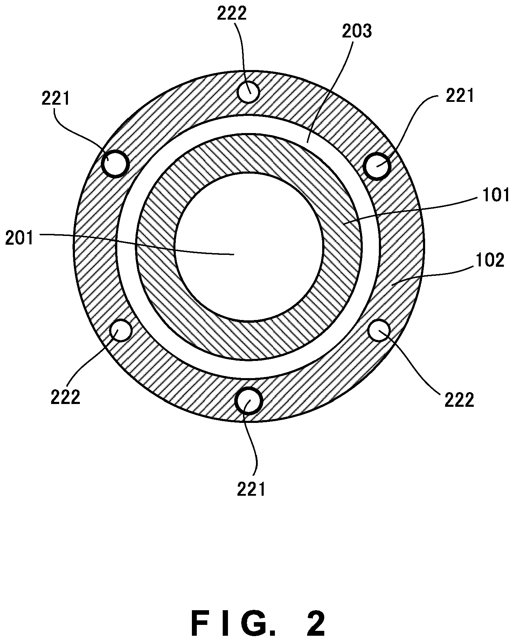

Fig. 2 is an end view showing the downstream end of the processing nozzle 100. As shown in Fig. 2, the downstream end of the processing nozzle 100 is provided with an opening 201 of the optical path 111, an opening 203 of the supply path 103, openings 221 of the supply paths 121, and openings 222 of the supply paths 122.

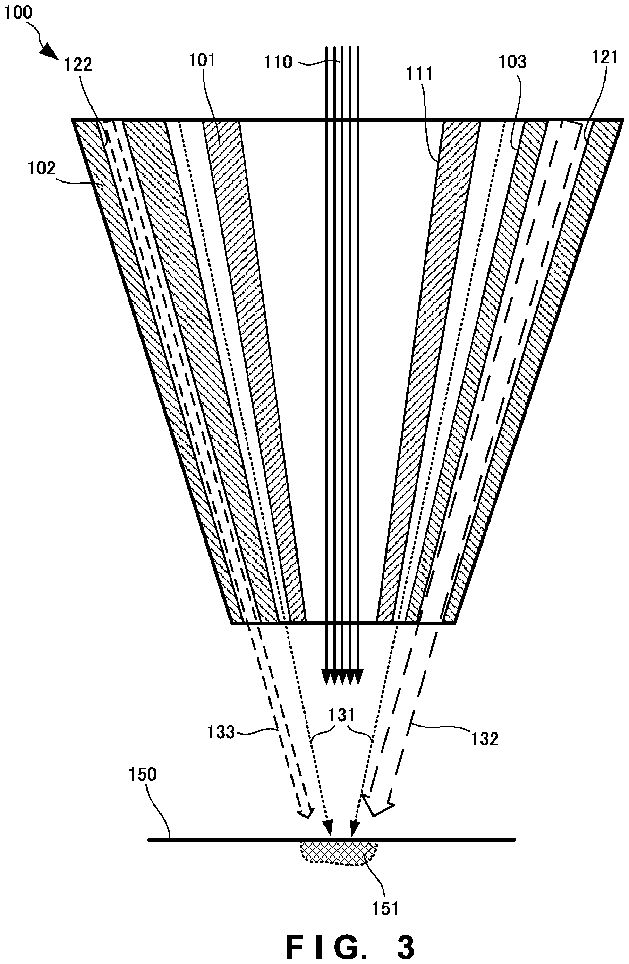

Fig. 3 is a sectional view taken along a line A - A in Fig. 1. As shown in Fig. 3, a powder material 131 supplied from the ring-shaped supply path 103 forms a very thin ring-shaped flow and converges to a narrow range. On the other hand, the six supply paths 121 and 122 arranged on the circumference supply the powder material in an amount larger than the supply path 103 to the process surface 150. The supply paths 121 are formed to be larger in diameter than the supply paths 122. The supply paths 121 supply the powder material in an amount larger than the supply paths 122 to the process surface 150.

Out of these supply paths, supply paths to use are changed in accordance with the shaping accuracy and shaping speed, and the powder material is supplied. For example, to do precise shaping, the powder material is properly supplied from the periphery to one point using only the supply path 103.

On the other hand, to do high-speed shaping while maintaining shaping accuracy, the powder material in an amount large to some extent is supplied to the process surface 150 using the supply paths 121. In addition, to do ultrahigh-speed shaping, the powder material in a larger amount is supplied to the process surface 150 using both the supply paths 121 and 122. To do extra-high-speed shaping, the powder material is supplied to the process surface 150 using all the supply paths 103, 121, and 122.

As described above, by variously combining the supply paths, powder material supply can be performed in seven stages using only the supply path 103, only the supply paths 121, only the supply paths 122, the supply paths 103 and 121, the supply paths 103 and 122, the supply paths 121 and 122, and the supply paths 103, 121, and 122.

Additionally, for example, when stacking a TiAl alloy, Ti and Al are supplied to different supply paths. This makes it possible to ignore the influence of transport efficiency depending on the material difference and stack the TiAl alloy at a weight ratio according to the design value.

When stacking a plurality of different materials as well, the different materials can be stacked using different supply paths for the respective materials. Stacking a plurality of different materials means, for example, stacking an adhesion layer on copper (base material) and then stacking iron. In addition, when powders that are of the same material but have different particle sizes are supplied using different supply paths, shaping processing can be performed at a speed and accuracy according to shaping conditions.

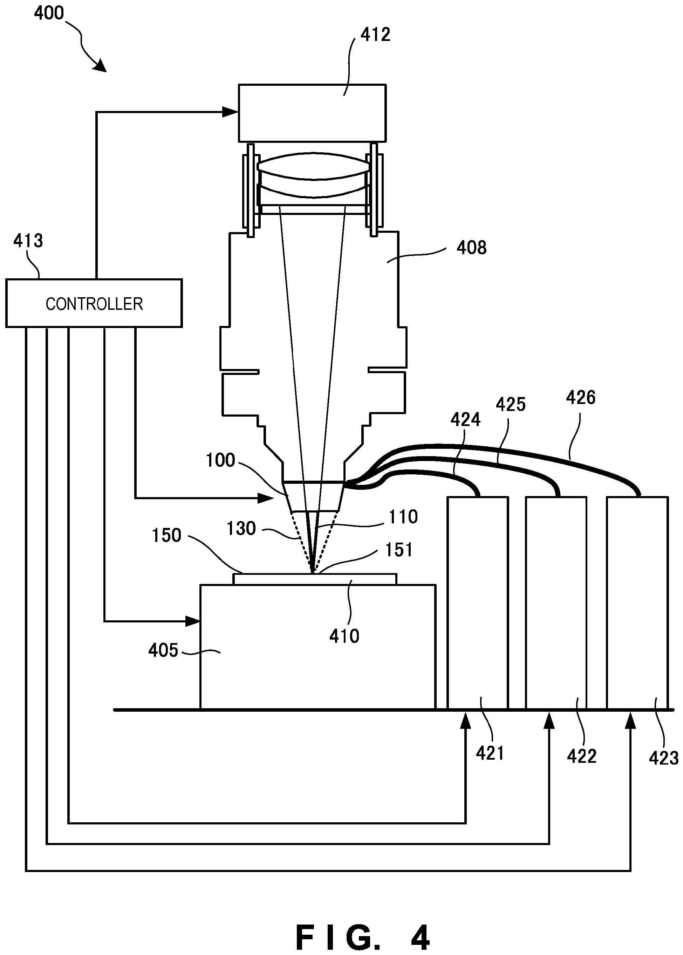

An optical machining apparatus 400 including the processing nozzle 100 will be described with reference to Fig. 4. The optical machining apparatus 400 is an apparatus that produces a three-dimensional shaped object (or overlay welding) by melting a material using heat generated upon condensation of light. The optical machining apparatus 400 includes a light source 412, a stage 405, material storages 421 to 423, material suppliers 424 to 426, a processing head 408, and a controller 413.

As the light source 412, a laser source is used here. However, an LED, a halogen lamp, or a xenon lamp is usable. Alternatively, for example, an electron beam or the like may be used.

The stage 405 is an X stage, an XY stage, or an XYZ stage. The material storages 421 to 423 supply carrier gases containing materials to the processing nozzle 100 via the material suppliers 424 to 426. For example, a material indicates particles such as metal particles or resin particles. A carrier gas is an inert gas and, for example, argon gas, nitrogen gas, helium gas, or the like is usable.

The processing head 408 converges the laser beam from the light source 412 by an internally provided optical system including a lens and the like. The processing nozzle 100 is attached to the downstream end of the processing head 408.

The controller 413 inputs shaping conditions such as fine writing/bold writing and the shape of a shaped object, changes the output value of the laser beam from the light source 412, the position and direction of the processing head 408, the position of the stage 405, and the like and also changes the powder spot shape by controlling the processing nozzle 100 in accordance with the input shaping conditions. The controller 413 also controls the material suppliers 424 to 426 to control the types and amounts of materials to be ejected from the processing nozzle 100.

According to the above-described arrangement, it is possible to provide a processing nozzle capable of simultaneously ejecting a plurality of types of powders.

### [Second Embodiment]

A processing nozzle 500 according to the second embodiment of the present invention will be described next with reference to Fig. 5. Fig. 5 is a sectional view for explaining the arrangement of the processing nozzle 500 according to this embodiment. The processing nozzle 500 according to this embodiment is different from the first embodiment in that flappers 501 and 502 are provided. The rest of the components and operations is the same as in the first embodiment. Hence, the same reference numerals denote the same components and operations, and a detailed description thereof will be omitted.

The flappers 501 and 502 can change the flows of powder materials discharged from supply paths 121 and 122. That is, the powder material discharged from the supply path 121 can be supplied to a powder spot 511, and the powder material discharged from the supply path 122 can be supplied to a powder spot 512.

A laser beam 110 is designed to make a process surface 150 hottest generally by the arrangement of a lens. Hence, the powder spots 511 and 512 are colder than a molten pool 151 on the process surface 150. The flappers 501 and 502 are controlled so as to supply the powder materials to the powder spots 511 and 512 suitable for the melting temperatures of the powder materials.

This makes it possible to supply a powder material under a good environment and implement accurate shaping. For example, when performing multilayered shaping using different materials as well, various kinds of materials can be stacked under an environment suitable for the materials by selectively using the supply paths 103, 121, and 122 and adjusting the angles of the flappers 501 and 502. For example, a powder material having a low melting point is supplied to a higher point above the process surface 150, and a powder material having a high melting point is supplied to a point near the process surface 150, thereby changing the melting positions of the powder materials and improving the mixing accuracy of the powder materials.

### [Third Embodiment]

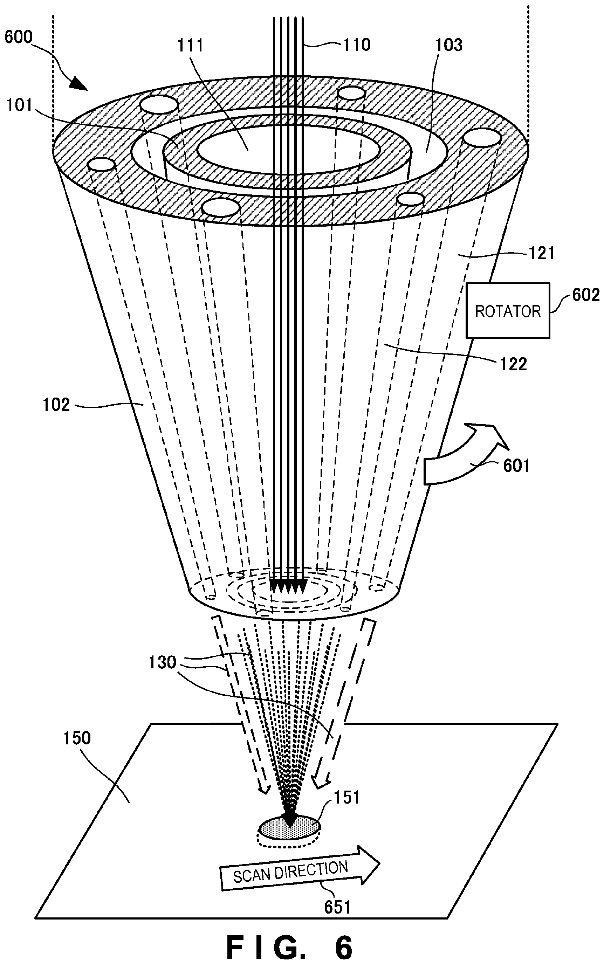

A processing nozzle 600 according to the third embodiment of the present invention will be described next with reference to Fig. 6. Fig. 6 is a perspective view for explaining the arrangement of the processing nozzle 600 according to this embodiment. The processing nozzle 600 according to this embodiment is different from the first embodiment in that a rotator 602 that rotates an outer housing 102 in a rotation direction 601 with respect to an inner housing 101 is provided. The rest of the components and operations is the same as in the first embodiment. Hence, the same reference numerals denote the same components and operations, and a detailed description thereof will be omitted.

According to this embodiment, the outer housing 102 can be rotated in accordance with a direction (scan direction) 651 in which a molten pool 151 travels on a process surface 150. That is, the arrangement of supply paths 121 and 122 provided inside the outer housing 102 with respect to the molten pool 151 can be changed in accordance with the scan direction 651. For example, to supply a large quantity of a powder material to the front of the molten pool 151 in the scan direction 651, the outer housing 102 is rotated by 180° from the state shown in Fig. 6. That is, when two of the three supply paths 121 are arranged in front of the molten pool 151, the powder material supply amount is larger on the front side than on the rear side. In addition, for example, if the powder material supplied using the supply paths 122 should be supplied in a large amount on the rear side of the molten pool 151 in the scan direction 651 as well, the outer housing 102 is rotated by 180° from the state shown in Fig. 6.

As described above, according to this embodiment, it is possible to more finely control powder material supply in accordance with shaping conditions. Hence, a powder material can efficiently be used, and shaping accuracy can be improved.

## Claims

1. A processing nozzle (100) which in use ejects a powder material (130) to a molten pool (151) formed on a process surface by a laser beam (110), comprising:
an inner housing (101) that forms an optical path (111) to pass the laser beam; and
an outer housing (102) arranged while being separated from said inner housing by a gap serving as a first supply path (103) of the powder material, **characterized in that** a second supply path (121) of the powder material and a third supply path (122) having a diameter different from said second supply path are provided inside said outer housing.

2. The processing nozzle according to claim 1, wherein said outer housing has a cylindrical shape, and
said second supply path and said third supply path include at least two supply paths each, and are circumferentially alternately provided inside said outer housing.

3. The processing nozzle according to claim 1 or 2, wherein a flapper (501,502) that
changes an ejection direction of the powder material discharged from one of said first powder material supply path and said second powder material supply path is further provided between said outer housing and the process surface.

4. The processing nozzle according to claim 1, 2, or 3, further comprising a rotator (602) that rotates said outer housing.

5. A processing head comprising:
a processing nozzle of any one of claims 1 to 4; and
a converging device that converges a laser beam.

6. A machining apparatus comprising:
a processing head of claim 5; and
a material supplier (424-426) that supplies a powder material to said processing head.

## Patentansprüche

1. Bearbeitungsdüse (100), die bei der Verwendung einen Pulverwerkstoff (130) zu einem Schmelzbad (151) ausstößt, das auf einer Bearbeitungsfläche durch einen Laserstrahl (110) gebildet wird, mit:
einem Innengehäuse (101), das einen optischen Pfad (111) zum Hindurchführen des Laserstrahls bildet; und
einem Außengehäuse (102), das angeordnet ist, während es von dem Innengehäuse durch einen Spalt getrennt ist, der als ein erster Zufuhrpfad (103) des Pulverwerkstoffes dient,
**dadurch gekennzeichnet, dass**
ein zweiter Zufuhrpfad (121) des Pulverwerkstoffes und ein dritter Zufuhrpfad (122) mit einem von dem zweiten Zufuhrpfad unterschiedlichen Durchmesser innerhalb des Außengehäuses bereitgestellt sind.

2. Bearbeitungsdüse nach Anspruch 1, wobei das Außengehäuse eine Zylinderform hat, und
der zweite Zufuhrpfad und der dritte Zufuhrpfad jeweils mindestens zwei Zufuhrpfade haben und in Umfangsrichtung abwechselnd innerhalb des Außengehäuses bereitgestellt sind.

3. Bearbeitungsdüse nach Anspruch 1 oder 2, wobei ferner eine Prallplatte (501, 502), die eine Ausstoßrichtung des Pulverwerkstoffes ändert, der von einem von dem ersten Pulverwerkstoff-Zufuhrpfad und dem zweiten Pulverwerkstoff-Zufuhrpfad abgegeben wird, zwischen dem Außengehäuse und der Bearbeitungsfläche bereitgestellt ist.

4. Bearbeitungsdüse nach Anspruch 1, 2 oder 3, die ferner eine Dreheinrichtung (602) aufweist, die das Außengehäuse dreht.

5. Bearbeitungskopf mit:
einer Bearbeitungsdüse nach einem der Ansprüche 1 bis 4; und
einem Konvergier-Gerät, das einen Laserstrahl konvergiert.

6. Bearbeitungsvorrichtung mit:
einem Bearbeitungskopf nach Anspruch 5; und
einer Werkstoffzufuhrvorrichtung (424-426), die einen Pulverwerkstoff dem Bearbeitungskopf zuführt.

## Revendications

1. Buse de traitement (100) qui, à l'usage, éjecte un matériau en poudre (130) dans un bain en fusion (151) formé sur une surface de traitement par un faisceau laser (110), comprenant :
un boîtier interne (101) qui forme une trajectoire optique (111) pour faire passer le faisceau ; et
un boîtier externe (102) agencé tout en étant séparé dudit boîtier interne par un espace servant de première trajectoire d'alimentation (103) du matériau en poudre, **caractérisée en ce qu'**une deuxième trajectoire d'alimentation (121) du matériau en poudre et une troisième trajectoire d'alimentation (122) ayant un diamètre différent de la deuxième trajectoire d'alimentation sont prévues à l'intérieur dudit boîtier externe.

2. Buse de traitement selon la revendication 1, dans laquelle ledit boîtier externe a une forme cylindrique, et
ladite deuxième trajectoire d'alimentation et ladite troisième trajectoire d'alimentation comprennent au moins deux trajectoires d'alimentation chacune, et sont prévues de manière circonférentiellement alternée à l'intérieur dudit boîtier externe.

3. Buse de traitement selon la revendication 1 ou 2, dans laquelle un clapet (501, 502) qui modifie une direction d'éjection du matériau en poudre déchargé par l'une parmi ladite première trajectoire d'alimentation en matériau en poudre et ladite deuxième trajectoire d'alimentation en matériau en poudre, est en outre prévue entre ledit boîtier externe et la surface de traitement.

4. Buse de traitement selon la revendication 1, 2 ou 3, comprenant en outre un rotateur (602) qui fait tourner ledit boîtier externe.

5. Tête de traitement comprenant :
une buse de traitement selon l'une quelconque des revendications 1 à 4 ; et
un dispositif convergent qui fait converger un faisceau laser.

6. Appareil d'usinage comprenant :
une tête de traitement selon la revendication 5 ; et
un dispositif d'alimentation en matériau (424-426) qui fournit un matériau en poudre à ladite tête de traitement.
